# EUROPEAN PATENT APPLICATION

(11) **EP 1 411 462 A2**
(43) Date of publication of application: **21.04.2004**
(21) Application number: 03255992.4
(22) Date of filing: 23.09.2003
(51) Int. Cl.: G06K 15/00

(54) **Printer mode control**

(30) Priority: 23.09.2002 KR 2002057645
(71) Applicant: SAMSUNG ELECTRONICS CO. LTD., Suwon-city, Kyungki-do (KR)
(72) Inventor: Lee, Sung-hi, Paldal-gu, Suwon-si Gyeonggi-do (KR)
(74) Representative: Geary, Stuart Lloyd

(57) **Abstract**

Utilizing a memory of a printer by storing emulation information selected from among a plurality of emulation information stored into a first memory into a predetermined storage area in a second memory and analyzing a type of emulation information of received printing data to determine whether a type of the emulation information stored into the predetermined storage area matches the type of the emulation information analyzed. If the type of the emulation information stored into the predetermined storage area does not match the type of the emulation information analyzed, emulation information of a type matching the type of the emulation information analyzed is retrieved from the first memory and stored into the predetermined storage area. Active emulation information is stored in a predetermined storage area of a second memory, such as a RAM, allowing diversely formatted information to be printed using the active emulation information without increasing memory capacity.

## Description

The present invention relates to a printer comprising a non-volatile memory storing a plurality of printing control data sets, a writable memory, control means configured for copying individual printer control data sets from the non-volatile memory to the writable memory in dependence on characteristics of input printing signals.

Generally, printers support different emulation modes. If data for one mode is mistakenly printed in a different mode, the result is a mess of incomprehensible characters. Conventional printers that support various emulation modes retain emulation data in firmware. Such conventional printers store uncompressed emulation data in a memory, retrieve the stored emulation data and print according to the emulation data. More particularly, such conventional printers store all emulation data in compressed form in a flash read only memory (ROM), uncompress the emulation data and store it in Random Access Memory (RAM) when being initialized and put into a different mode, and use the uncompressed emulation data for printing.

As functions and emulation modes supported by printers become more complicated and diversified, the size of the printer's firmware program and emulation data increases, and it is for this reason that the emulation data, stored in the ROM, is often compressed. However, all of the compressed emulation data is decompressed at the same time during printer initialisation with the result that the RAM is used inefficiently.

US-A-6128094 discloses a method in which a printer memory stores the emulation data required for printing. However, when the emulation mode changes the newly required emulation data stored in the RAM in a new location and does not overwrite the previously used emulation data.

A printer according to the present invention is characterised in that the control means is configured such that a previously copied printer control data set is overwritten by a subsequently copied printer control data set.

The printing control data sets may be stored in the non-volatile memory in compressed form, in which case the control means is configured to decompress the printing control data sets when copying them to the writable memory.

Preferably, the control means is configured to determine a printer control data set required for an input printing signal, determine whether the required printer control data set is currently stored in the writable memory and, in the event that it is determined not to be, copy the required printer control data set from the non-volatile memory to the writable memory.

An embodiment of the present invention will now be described, by way of example, with reference to the accompanying drawings, in which:-
Figure 1 is a flowchart of memory usage method according to the present invention; and
Figure 2 is a block diagram of an apparatus according to the present invention.

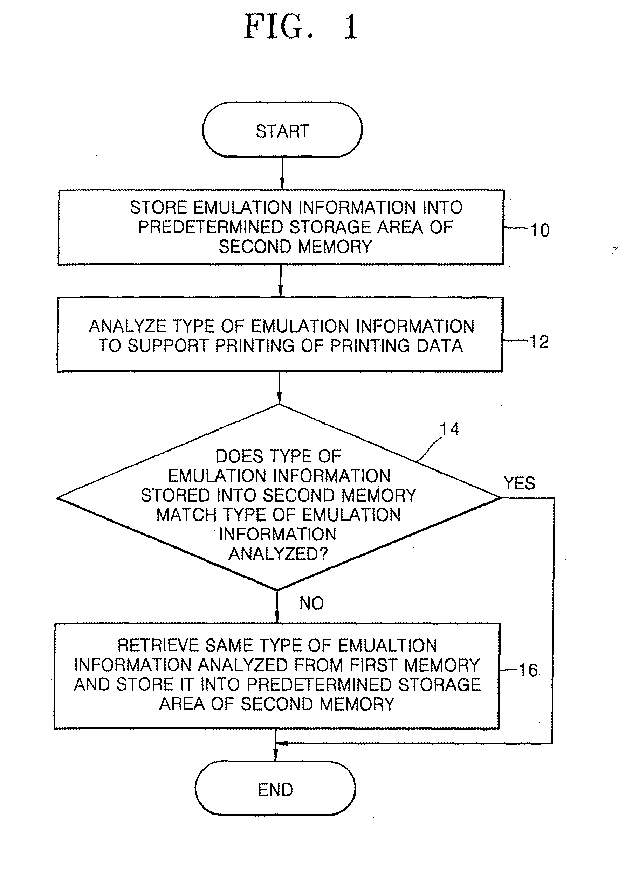

Referring to Figure 1, a method of using the memory of a printer comprises operations 10 through 16 for determining whether the current emulation information, stored in a predetermined storage area of a second memory matches a the emulation information now required for printing and overwriting the current emulation information in the event that there is not a match.

More particularly, at operation 10, printer emulation information set, selected from among a plurality of emulation information sets stored into a first memory, as inactive printer emulation information, is stored in a predetermined storage area in a second memory, as active printer emulation information, when the printer is initialized. The emulation information stored in the first memory may be available in uncompressed or compressed form. The first memory is a read only memory (ROM) and the second memory is a random access memory (RAM). When power is applied to the printer, a boot image program, which is a component of a firmware program, initializes the printer. During this initialization or boot process, the emulation information set selected from the emulation information sets stored in the ROM (i.e., the first memory) is stored in a predetermined storage area of the RAM (i.e. a second storage area as an active printer emulation information storage). If the emulation information set has been compressed, it is uncompressed and then stored in the RAM.

The predetermined storage area of the second memory is a commonly designated storage area for storing any of the printer emulation information sets as active printer emulation information. The predetermined storage area in the second memory has a storage capacity corresponding to the emulation information set having the greatest size of all of the emulation information sets. Therefore, the storage capacity of the predetermined storage area in the second memory allows storing of the largest emulation information set.

At operation 12, the emulation information set required for printing of printing data transmitted to the printer is determined. Once the printing data has been input to the printer, header information of the printing data is analyzed to determine which emulation information set is required for the input printing data. At operation 14, it is determined whether the emulation information set currently stored in the predetermined storage area of the second memory matches is the set determined to be required for the input printing data (i.e. whether the active emulation information set matches emulation information set required for the input print data). If, at operation 14, it is determined that the current set is the required set, i.e. the current set matches the stored set, printing is performed.

However, if operation 14 determines that the current emulation information set is not the set required for the input printing data (i.e. the active printer emulation information set does not match the set determined to be required in operation 16), the required emulation information set is retrieved from the first memory and stored in the predetermined storage area of the second memory, as the active printer emulation information set. The previously active emulation information set stored in the predetermined storage area of the second memory is deleted (i.e. the previously active emulation information is replaced with a new active emulation information). Therefore, if, at operation 14, the emulation information set previously stored into the second memory is not the required emulation information set for printing the received printing data, the emulation information set for printing the received printing data is retrieved from the first memory at operation 16. The retrieved emulation information set is stored in the predetermined storage area of the second memory as the new active emulation information set where the previous emulation information set was been stored.

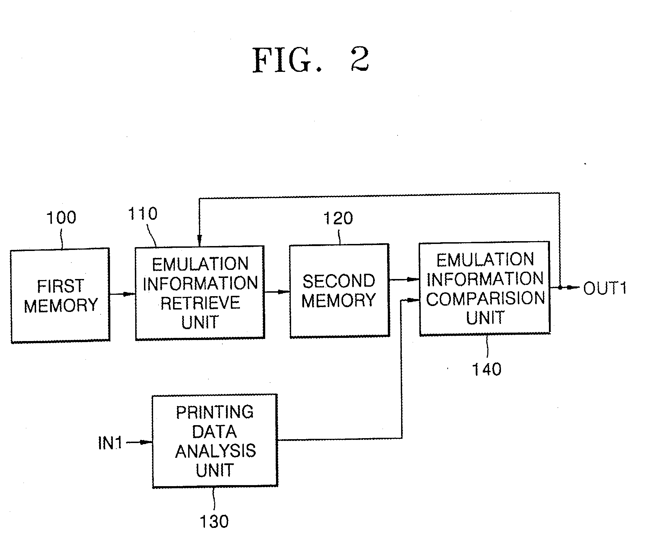

Referring to Figure 2, the memory system of a printer according to the present invention comprises a first memory 100, an emulation information retrieving unit 110, a second memory 120, a printing data analyzing unit 130 and an emulation information comparing unit 140. The first memory 100 stores a plurality of printer emulation information sets in a compressed or uncompressed form. The first memory 100 is a ROM.

During printer initialization, the emulation information retrieving unit 110 retrieves an arbitrary or predetermined printer emulation information set from among the plurality of emulation information sets stored in the first memory 100 and stores the retrieved emulation information in a predetermined storage area of the second memory 120 as the active printer emulation information set. For example, the emulation information set is retrieved from among the relatively frequently used emulation information sets. The emulation information retrieving unit 110 also receives a comparison result from the emulation information comparing unit 140, and retrieves another emulation information set from the first memory 100, based on the comparison result, and stores the newly retrieved emulation information set in the predetermined storage area of the second memory 120, as a newly activated printer emulation information set.

The second memory 120 has a predetermined storage area designed to store any arbitrary emulation information set, thereby providing an active printer emulation information storage means. The predetermined storage area of the second memory 120 is a commonly designated RAM storage area for storing any emulation information set. Newly retrieved emulation information (activated printer emulation information) is stored into the same area of the predetermined storage area where the previous emulation information was stored. The predetermined storage area in the second memory has a storage capacity corresponding to emulation information set having the greatest size from among the plurality of emulation information set stored in the first memory 100. The storage capacity of the predetermined storage area in the second memory is sufficient to allow storing the largest uncompressed emulation information set.

The printing data analyzing unit 130 determines the emulation information set required to support printing of printing data received by the printer through an input terminal IN1 and outputs an indication of the emulation information set determined to be required. The printing data analyzing unit 130 analyzes header information of the received printing data to identify the emulation information set required and outputs the result of the analysis to the emulation information comparing unit 140.

The emulation information comparing unit 140 compares the identity of the emulation information set stored into the predetermined storage area of the second memory 120, as the active printer emulation information set, with identity of the emulation information set determined to be required by the printing data analysis unit 130, and outputs the comparison result through an output terminal OUT1 to the emulation information retrieving unit 110. If the two emulation information sets match, printing is performed. Conversely, if the two emulation information sets do not match, the emulation information retriever 110 retrieves the emulation information set determined to be required, for performing printing of the printing data, from the first memory 100 and stores the newly retrieved matching emulation information set in the second memory 120. Accordingly, the processes of the present invention as embodied in the emulation information retriever 110, the emulation information comparator 140 and the received printing data analysis unit 130, activate and deactivate printer emulation information according to received printing data type. The processes of the present invention can be implemented in software and/or computing hardware.

As described above, a print memory utilization method and apparatus according to the present invention stores printer emulation information sets in a common storage area of a second memory, such as a RAM, as active printer emulation information, thus allowing diverse information to be printed using emulation information sets without increasing the storage capacity of the second memory. More particularly, the present invention provides a printer controller utilizing a memory of a printer according to a process of storing emulation information selected from among a plurality of emulation information stored into a first memory into a predetermined storage area in a second memory, when the printer is initialized, and analyzing a type of emulation information of received printing data to determine whether a type of the emulation information stored into the predetermined storage area matches the type of the emulation information analyzed. If the type of the emulation information stored into the predetermined storage area does not match the type of the emulation information analyzed, the controller retrieves from the first memory emulation information type matching the type of the emulation information analyzed and stores the retrieved matching emulation information into the predetermined storage area (i.e., the controller replaces the previously active emulation information with a new active emulation information). Accordingly, emulation information stored in a non-volatile memory, such as a ROM, is activated by being stored in a predetermined storage area of a printer volatile memory, such as a RAM, accessible by the printer applications, allowing diversely formatted information to be printed using the active emulation information without increasing the volatile memory capacity. Therefore, the present invention activates and deactivates printer emulation information (modes) in a predetermined RAM area in response to emulation information type of received print data.

While this invention has been particularly shown and described with reference to a few embodiments thereof, it will be understood by those skilled in the art that various changes in form and details may be made therein.

## Claims

1. A printer comprising:
a non-volatile memory (100) storing a plurality of printing control data sets;
a writable memory (120);
control means (110, 130, 140) configured for copying individual printer control data sets from the non-volatile memory (100) to the writable memory (120) in dependence on characteristics of input printing signals,
**characterised in that** the control means is configured such that a previously copied printer control data set is overwritten by a subsequently copied printer control data set.

2. A printer according to claim 1, wherein the printing control data sets are stored in the non-volatile memory (100) in compressed form and the control means (110, 130, 140) is configured to decompress the printing control data sets when copying them to the writable memory (120).

3. A printer according to claim 1 or 2, wherein the control means (110, 130, 140) is configured to determine a printer control data set required for an input printing signal, determine whether the required printer control data set is currently stored in the writable memory (120) and, in the event that it is determined not to be, copy the required printer control data set from the non-volatile memory (100) to the writable memory (120).

4. A method of utilizing a memory of a printer printing using emulation information stored in a first or a second memory, the method comprising:
storing emulation information selected from among a plurality of emulation information stored into the first memory into a predetermined storage area of the second memory when the printer is initialized;
analyzing a type of emulation information of printing data transmitted to the printer;
determining whether a type of the emulation information stored into the predetermined storage area of the second memory matches the type of the emulation information analyzed; and
if the type of the emulation information stored into the predetermined storage area does not match the type of the emulation information analyzed, retrieving an emulation information type from the first memory matching the type of the emulation information analyzed and storing the retrieved emulation information into the predetermined storage area of the second memory.

5. The method of claim 4, wherein the predetermined storage area of the second memory has a storage capacity to store a biggest size emulation information from among the plurality of emulation information stored in the first memory.

6. A printer memory utilization apparatus printing using emulation information stored in a first or a second memory, the apparatus comprising:
an emulation information retrieving unit that retrieves emulation information from among a plurality of emulation information stored into the first memory and stores the retrieved emulation information into a predetermined storage area of the second memory;
a printing data analyzing unit that analyzes a type of emulation information of received printing data to support printing the received printing data and outputs the type of the emulation information analyzed; and
an emulation information comparing unit that compares a type of the emulation information stored into the predetermined storage area of the second memory with the type of the emulation information analyzed and outputs a comparison result,
wherein the emulation information retrieving unit retrieves an emulation information type from the first memory matching the type of the emulation information analyzed, in response to the comparison result, and stores the retrieved emulation information into the predetermined storage area of the second memory.

7. The apparatus of claim 6, wherein the predetermined storage area of the second memory has a storage capacity to store a biggest size emulation information from among the plurality of the emulation information stored in the first memory.

8. The apparatus of claim 6, wherein the first memory is a read only memory (ROM) and the second memory is a random access memory (RAM).

9. The apparatus of claim 6, wherein the emulation information retrieving unit retrieves the matching emulation information type from the first memory, if according to the comparison result the emulation information type of the received printing data does not match the emulation information type stored in the predetermined storage area of the second memory.

10. A printer, comprising:
a first memory storing a plurality of deactivated printer emulation information;
a second memory storing active emulation information; and
a programmed computer processor performing a process, comprising:
analyzing a type of emulation information of received print data,
determining whether a type of the active emulation information matches the analyzed emulation information type of the received print data, and
storing in the second memory, from the deactivated emulation information stored in the first memory, an emulation information type matching the analyzed emulation information type of the received print data according to the determining, as a new activated emulation information.

11. The printer of claim 10, wherein the first memory is a non-volatile memory and the second memory is a volatile memory.

12. The printer of claim 10, wherein the plurality of deactivated emulation information stored in the first memory are in compressed or uncompressed form, and
the programmed computer processor retrieves compressed deactivated emulation information from the first memory, decompresses the retrieved deactivated emulation information, and stores the retrieved decompressed deactivated emulation information in the second memory as the new activated emulation information.

13. A printer, comprising:
a programmed computer processor activating and deactivating printer emulation modes in a predetermined random access memory area in response to emulation information type of received print data.

14. The apparatus of claim 6, wherein the plurality of emulation information stored in the first memory are in compressed or uncompressed form and the emulation information retrieving unit decompresses compressed emulation information retrieved from the first memory and stores the retrieved decompressed emulation information in the predetermined storage area of the second memory.
